# EUROPÄISCHE PATENTSCHRIFT

(11) **EP 3 624 290 B1**
(45) Veröffentlichungstag und Bekanntmachung des Hinweises auf die Patenterteilung: **28.10.2026**
(21) Anmeldenummer: 18194028.9
(22) Anmeldetag: 12.09.2018
(51) Int. Cl.: H02J 3/14, H02J 3/32, B60L 53/62, B60L 53/63, B60L 53/67, B60L 53/68, H02J 7/50, H02J 13/13, H02J 13/14

(54) **VERFAHREN UND STEUEREINRICHTUNG ZUM BETREIBEN EINES ELEKTRISCHEN ENERGIEVERTEILNETZES MIT LADESTATIONEN**
METHOD AND CONTROL DEVICE FOR OPERATING AN ELECTRICAL POWER DISTRIBUTION NETWORK WITH CHARGING STATIONS
PROCÉDÉ ET DISPOSITIF DE COMMANDE DESTINÉ AU FONCTIONNEMENT D'UN RÉSEAU DE DISTRIBUTION D'ÉNERGIE ÉLECTRIQUE AVEC DES BORNES DE RECHARGE

(43) Veröffentlichungstag der Anmeldung: 18.03.2020
(73) Patentinhaber: Siemens Aktiengesellschaft, 80333 München (DE)
(72) Erfinder: Fröhner, Wiebke, 92224 Amberg (DE); Werner, Thomas, 91126 Rednitzhembach (DE)
(74) Vertreter: Siemens Patent Attorneys

(56) Entgegenhaltungen:
- WO-A1-2012/149965
- US-A1- 2014 058 575

## Beschreibung

Die Erfindung betrifft ein Verfahren zum Betreiben eines elektrischen Energieverteilnetzes, wobei das Energieverteilnetz zumindest zwei Abzweige aufweist, die mit elektrischer Energie gespeist werden, und wobei an die Abzweige eine Mehrzahl von Ladestationen elektrisch angeschlossen sind, wobei der in den jeweiligen Abzweigen fließende Strom erfasst wird, mit einer Steuereinrichtung geprüft wird, ob der in dem jeweiligen Abzweig fließende Strom einen abzweigspezifischen Schwellenwert verletzt und bei erkannter Schwellenwertverletzung von der Steuereinrichtung ein Steuersignal erzeugt wird,. Die Erfindung betrifft auch eine Steuereinrichtung zur Durchführung eines solchen Verfahrens.

Mit zunehmender Durchdringung von Ladestationen für Elektrofahrzeuge geraten Energieverteilnetze, insbesondere Niederspannungsverteilnetze, zunehmend an ihre Kapazitätsgrenzen. Studien zeigen, dass bereits relativ kleine Durchdringungsgrade zu Grenzwert- bzw. Schwellenwertverletzungen, wie zum Beispiel die Überschreitung der maximalen Ströme, auf den Leitungen führen können. Aus diesem Grund werden Lademanagementsysteme für Energieverteilnetze diskutiert, die bei (drohenden) Grenzwertverletzungen durch Sollwertvorgaben und/oder Schaltvorgaben in den Ladevorgang eingreifen, um so das Netz zu entlasten. Im Falle von dezentralen Lademanagementsystemen wird dazu eine Steuerungseinrichtung in der Ortsnetzstation eingebracht, welche eine Überwachung und ggf. Steuerung des Energieverteilnetzes durchführt.

Beispielsweise ist hierzu aus der US 8,957,634 B2 ein Lademanagement für Ladestationen in einem Energieverteilnetz bekannt, bei dem die Ladeleistung jeder einzelnen Ladestation überwacht wird und ein aktueller und zukünftiger Bedarf elektrischer Energie ermittelt wird. Der Ladestation wird ein Zeitfenster zugeteilt, in dem sie einen Ladevorgang durchführen darf.

In Energieverteilnetzen mit einer hohen Anzahl von Ladestationen zeigt es sich jedoch, dass die Kosten für die Installation und die laufende Datenpflege der bekannten Lösungen zu hoch sind, um eine wirtschaftliche Alternative zum klassischen Netzausbau darzustellen. Üblicherweise muss nämlich eine manuelle Konfiguration der Ladestationen stattfinden, um sie an eine Steuereinrichtung derart anbinden zu können, dass mittels der Steuereinrichtung eine Ansteuerung hinsichtlich jeder einzelnen Ladestation stattfinden kann. Zu einer solchen Konfiguration gehört meist die Eingabe eines Typs der Ladestation und einer maximalen Ladeleistung. Die Datenpflege der Konfigurationsdaten in der Steuereinrichtung ist zudem insbesondere deswegen aufwendig, weil es sich bei vielen Ladestationen um privat eingerichtete und betriebene Stationen handelt und der Ausbau des Energieverteilnetzes mit weiteren Ladestationen nur bedingt der Kontrolle des Netzbetreibers unterliegt. Außerdem ist eine bidirektionale Kommunikationsverbindung zwischen der Ladestation und der Steuereinrichtung notwendig, um einerseits die jeweiligen Konfigurationsinformationen und aktuellen Messwerte der Ladeleistung und andererseits etwaige Steueranweisungen zwischen der Steuereinrichtung und der jeweiligen Ladestation übertragen zu können.

Ein Verfahren und eine Steuereinrichtung der eingangs genannten Art sind zudem beispielsweise aus der US 2014/058575 A1 bekannt.

Es ist somit die Aufgabe der vorliegenden Erfindung, den sicheren Betrieb eines Energieverteilnetzes mit einer Mehrzahl von Ladestationen mit möglichst geringem Aufwand, insbesondere geringem Konfigurationsaufwand, zu ermöglichen.

Diese Aufgabe wird durch ein Verfahren und eine Steuereinrichtung entsprechend der unabhängigen Patentansprüche gelöst. Vorteilhafte Ausführungsformen sind in den Unteransprüchen beschrieben.

Konkret ist erfindungsgemäß hinsichtlich des Verfahrens vorgesehen, dass bei erkannter Schwellenwertverletzung von der Steuereinrichtung ein Steuersignal erzeugt wird, das über eine unidirektionale Kommunikationsverbindung an zumindest alle diejenigen Ladestationen übertragen wird, die an den Abzweig, für den die Schwellenwertverletzung erkannt worden ist, angeschlossenen sind, wobei das Steuersignal einen Steuerwert umfasst, der eine prozentuale Angabe zur Reduzierung der Ladeleistung enthält, und die das Steuersignal empfangenden Ladestationen ihre Ladeleistung entsprechend dem Steuerwert anpassen.

Ein besonderer Vorteil des erfindungsgemäßen Verfahrens besteht darin, dass die Steuerung der Ladeleistung nicht für jede Ladestation einzeln, sondern für den jeweiligen von der Schwellenwertverletzung betroffenen Abzweig erfolgt. Zu diesem Zweck ist es nicht notwendig, dass Konfigurationsdaten hinsichtlich des Typs und der maximalen Ladeleistung der Ladestation an die Steuereinrichtung übertragen werden. Hierdurch reduziert sich der Konfigurationsaufwand und die Datenpflege. Außerdem ist keine Übertragung von aktuellen Werten der Ladeleistung von der Ladestation an die Steuereinrichtung erforderlich, wodurch die Kommunikationsverbindung zwischen den Ladestationen und der Steuereinrichtung signifikant vereinfacht. Zur Übertragung der Steuersignale ist zudem nur eine geringe Bandbreite erforderlich.

Bei der Schwellenwertverletzung kann es sich typischerweise um eine Überschreitung eines Schwellenwertes handeln, wodurch erkannt wird, dass in dem fraglichen Abzweig durch gleichzeitiges Laden mehrerer Elektrofahrzeuge ein zu hoher Strom fließt. Das Steuersignal enthält dann einen Steuerwert, der eine Reduzierung der Ladeleistung bewirkt. In dem Fall, in dem die Batterien der Elektrofahrzeuge zumindest teilweise auch zur Rückspeisung elektrischer Energie ins Energieverteilnetz eingerichtet sind (beispielsweise um zu sogenannten Systemdienstleistungen wie z.B. einer Netzstabilisierung beizutragen), kann die Schwellenwertverletzung auch eine Unterschreitung darstellen, die angibt, dass weniger als der zur angeforderte Strom in dem fraglichen Abzweig fließt. Das Steuersignal enthält in diesem Fall einen Steuerwert, der die Ladeleistung der Ladestationen derart anpasst, dass eine Erhöhung der Rückspeisung erfolgt.

Der Schwellenwert wird üblicherweise an den jeweiligen Abzweig angepasst. Dieser weist durch seine Bauart bedingt eine gewisse Stromtragfähigkeit auf, die im Betrieb nicht überschritten werden sollte und die zur Festlegung des Schwellenwertes herangezogen werden kann. Im Fall einer Rückeinspeisung entspricht der Schwellenwert üblicherweise dem von diesem Abzweig zur Erfüllung eines Systemdienstes geforderten Stromfluss.

Erfindungsgemäß ist vorgesehen, dass mit der Steuereinrichtung geprüft wird, ob nach der Anpassung der Ladeleistung durch die Ladestationen die Grenzwertverletzung weiterhin ansteht.

Hierdurch kann in einfacher Weise festgestellt werden, ob sich der betroffene Abzweig nach Aussenden des Steuersignals in einem sicheren Zustand befindet, oder ob immer noch eine Überlastung droht bzw. ansteht.

Im Rahmen der Erfindung wird bei weiterhin anstehender Grenzwertverletzung erneut ein Steuersignal an zumindest diejenigen Ladestationen übertragen wird, die an den Abzweig, für den die Schwellenwertverletzung erkannt worden ist, angeschlossenen sind, und die das Steuersignal empfangenden Ladestationen ihre Ladeleistung erneut entsprechend dem Steuerwert anpassen.

Somit kann durch Aussenden eines weiteren Steuersignals ein weiterer Versuch unternommen werden, die Schwellenwertverletzung zu beenden. Der Vorgang wird im Rahmen der Erfindung so oft wiederholt werden, bis die Schwellenwertverletzung beendet ist.

Außerdem kann vorgesehen sein, dass wenn die Prüfung ergibt, dass der Schwellenwert nicht mehr verletzt wird, mittels der Steuereinrichtung eine Abweichung des aktuell in dem fraglichen Abzweig vorliegenden Stromflusses von einem als unkritisch angesehenen Stromfluss ermittelt wird, und mittels eines weiteren Steuersignals die Ladeleistung der jeweiligen Ladestationen derart angepasst wird, dass sich in dem Abzweig der als unkritisch angesehene Stromfluss einstellt.

Es kann nämlich sein, dass die Schwellenwertverletzung zwar beendet worden ist, hierzu jedoch eine übermäßige Anpassung der Ladeleistung erfolgt ist. Beispielsweise wurde zur Beendigung der Überschreitung des Schwellenwertes die Ladeleistung durch das Steuersignal so weit reduziert, dass nunmehr eine signifikante Unterschreitung des Schwellenwertes vorliegt. Dann kann durch die beschriebene vorteilhafte Weiterbildung des Verfahrens die Ladeleistung wieder in der Weise angepasst werden, dass erneut eine Annäherung an den Schwellenwert stattfindet.

In diesem Zusammenhang kann gemäß einer weiteren vorteilhaften Ausführungsform des erfindungsgemäßen Verfahrens vorgesehen sein, dass der als unkritisch angesehene Stromfluss dem Schwellenwert entspricht oder von diesem abgeleitet wird.

Auf diese Weise kann die Ladeleistung entweder so angepasst werden, dass sich ein Stromfluss einstellt, der exakt dem Schwellenwert entspricht (in diesem Fall entspricht der als unkritisch angesehene Stromfluss dem Schwellenwert). Alternativ wird der Stromfluss derart angepasst, dass ein gewisser Sicherheitsabstand vom Schwellenwert eingehalten wird (in diesem Fall ist der als unkritisch angesehene Stromfluss vom Schwellenwert verschieden und beispielsweise durch Addition oder Subtraktion eines Sicherheitswertes davon abgeleitet).

Eine weitere vorteilhafte Ausführungsform des erfindungsgemäßen Verfahrens sieht vor, dass das Steuersignal einerseits an solche Ladestationen gesendet wird, die von der Steuereinrichtung eindeutig dem fraglichen Abzweig zugeordnet werden können, und andererseits an solche Ladestationen gesendet wird, die von der Steuereinrichtung keinem Abzweig eindeutig zugeordnet werden können.

Auf diese Weise kann einerseits erreicht werden, dass auf jeden Fall diejenigen Ladestationen, die an dem von der Schwellenwertverletzung betroffenen Abzweig angeschlossen sind, an der Anpassung ihrer Ladeleistung teilnehmen. Darüber hinaus kann es jedoch auch vorkommen, dass in dem Energieverteilnetz Ladestationen vorhanden sind, die von der Steuereinrichtung (noch) keinem Abzweig eindeutig zugeordnet werden können. Beispielsweise kann es sich hierbei um erst kürzlich an das Netz angeschlossene Ladestationen handeln. Solche Ladestationen können entweder an den betroffenen Abzweig oder aber an einen anderen Abzweig angeschlossen sein. Damit sie jedoch an der Steuerhandlung teilnehmen können und im Zweifelsfall zur Beendigung der Schwellenwertverletzung des betroffenen Abzweigs teilnehmen können, werden sie in den Versand des Steuersignals eingeschlossen.

Um möglichst ohne manuelle Konfigurationseinstellungen auch neu an das Netz angeschlossene Ladestationen effektiv in die Steuerung einbeziehen zu können, wird gemäß einer weiteren vorteilhaften Ausführungsform des erfindungsgemäßen Verfahrens vorgeschlagen, dass nach Anschluss einer neuen Ladestation an einen der Abzweige die Steuereinrichtung eine Erkennung durchführt, an welchem Abzweig die neue Ladestation angeschlossen ist.

Auf diese Weise kann die Steuereinrichtung auch neu hinzugekommene Ladestationen in eine gezielte, auf den von der Schwellenwertverletzung betroffenen Abzweig gerichtete Steuerung einbeziehen.

Konkret kann in diesem Zusammenhang vorgesehen sein, dass zur Erkennung, an welchem Abzweig die neue Ladestation angeschlossen ist, die Steuereinrichtung an die neue Ladestation ein Test-Steuersignal sendet, die neue Ladestation bei Empfang des Test-Steuersignals ihre Ladeleistung anpasst, und die Steuereinrichtung den Strom in den Abzweigen vor und nach dem Aussenden des Test-Steuersignals vergleicht und die Ladestation als an demjenigen Abzweig angeschlossen erkennt, an dem der Strom-Vergleich eine auf das Test-Steuersignal zurückzuführende Änderung des fließenden Stroms ergibt.

Hierbei wird sozusagen testweise eine gezielte Anpassung der Ladeleistung nur der neu hinzugekommenen Ladestation durchgeführt. An allen Abzweigen werden die fließenden Ströme vor und nach Aussendung des Test-Steuersignals gemessen. Der Abzweig, der eine signifikante und auf das Steuersignal zurückzuführende Änderung zeigt, wird als der Abzweig erkannt, an dem die neue Ladestation angeschlossen ist.

Es kann allerdings vorkommen, dass während einer mittels des Test-Steuersignals durchgeführten Erkennung des Abzweigs, an dem die neue Ladestation angeschlossen ist, auch andere Abzweige eine Änderung des Stromflusses zeigen. Dies kann insbesondere durch Entnahmen bzw. Einspeisungen aufgrund von aktuell stattfindenden Ladevorgängen geschehen. Auch kann es sein, dass die neu angeschlossene Ladestation sich aktuell überhaupt nicht in einem Ladevorgang befindet und daher ihre Ladeleistung auch nicht anpassen kann. Um dennoch mit hoher Zuverlässigkeit erkennen zu können, an welchem Abzweig die neue Ladestation angeschlossen ist, wird gemäß einer weiteren vorteilhaften Ausführungsform des erfindungsgemäßen Verfahrens in diesem Zusammenhang vorgeschlagen, dass zur Erkennung, ob eine Änderung des fließenden Stroms in einem Abzweig auf das Test-Steuersignal zurückzuführen ist, der Versand des Test-Steuersignals und die Durchführung des Strom-Vergleichs wiederholt ausgeführt werden, und die Steuereinrichtung die Ladestation als an demjenigen Abzweig angeschlossen erkennt, an dem sich am häufigsten eine Änderung des fließenden Stroms ergibt.

Hinsichtlich der Kommunikationsverbindung zwischen Steuereinrichtung und Ladestation kann darüber hinaus vorgesehen sein, dass das Steuersignal von der Steuereinrichtung (15) an die Ladestationen (14a-j) als auf einer Leitung des Energieverteilnetzes aufmoduliertes Signal oder über eine drahtlose Kommunikationsverbindung oder über eine Internetverbindung übertragen wird.

Die oben genannte Aufgabe wird auch durch eine Steuereinrichtung zum Betreiben eines elektrischen Energieverteilnetzes gelöst, wobei das Energieverteilnetz zumindest zwei Abzweige aufweist, die mit elektrischer Energie gespeist werden, und wobei an die Abzweige eine Mehrzahl von Ladestationen elektrisch angeschlossen sind, wobei die Steuereinrichtung dazu eingerichtet ist, in den jeweiligen Abzweigen fließende Ströme zu erfassen und zu prüfen, ob der in dem jeweiligen Abzweig fließende Strom einen abzweigspezifischen Schwellenwert verletzt.

Erfindungsgemäß ist vorgesehen, dass die Steuereinrichtung dazu eingerichtet ist, bei erkannter Schwellenwertverletzung ein Steuersignal zu erzeugen, das über eine unidirektionale Kommunikationsverbindung an zumindest alle diejenigen Ladestationen übertragen wird, die an den Abzweig, für den die Schwellenwertverletzung erkannt worden ist, angeschlossenen sind, wobei das Steuersignal einen Steuerwert umfasst, der eine prozentuale Angabe zur Reduzierung der Ladeleistung enthält, um die das Steuersignal empfangenden Ladestationen zur Anpassung ihrer Ladeleistung entsprechend dem Steuerwert zu veranlassen.

Hinsichtlich der erfindungsgemäßen Steuereinrichtung gelten alle zu dem erfindungsgemäßen Verfahren voranstehend und nachfolgend gemachten Ausführungen und umgekehrt in entsprechender Weise, insbesondere ist die erfindungsgemäße Steuereinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Steuereinrichtung wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Steuereinrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine schematische Ansicht eines Energieverteilnetzes mit einer Steuereinrichtung und mehreren angeschlossenen Ladestationen;
- Figur 2: eine schematische Ansicht eines Ausführungsbeispiels einer Steuereinrichtung;
- Figur 3: ein Diagramm zur Erläuterung der Ansteuerung der Ladestationen mittels eines Steuerwertes; und
- Figur 4: eine Ansicht eines Energieverteilnetzes zur Erläuterung der Vorgehensweise bei Neuanschluss einer Ladestation.

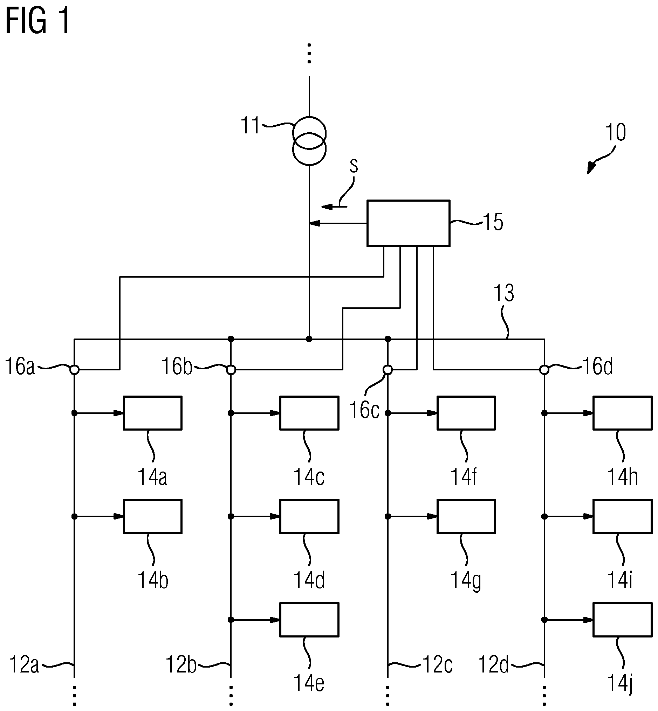

Figur 1 zeigt in schematischer Ansicht ein Energieverteilnetz 10, bei dem es sich bevorzugt um ein Niederspannungs-Verteilnetz handelt, an das elektrische Verbraucher angeschlossen sind. Das Energieverteilnetz 10 wird aus einem übergeordneten Energieversorgungsnetz, beispielsweise einem Mittelspannungsnetz, über einen Transformator 11, der beispielsweise Bestandteil einer sogenannten "Ortsnetzstation" sein kann, mit elektrischer Energie versorgt. Das Energieverteilnetz weist im vorliegenden Beispiel vier Abzweige 12a-d auf, die über eine gemeinsame Sammelschiene 13 mit dem Ausgang des Transformators 11 verbunden sind. An die Abzweige 12a-d sind neben anderen (in der Figur 1 der Übersichtlichkeit halber nicht dargestellten) Lasten Ladestationen 14a-j angeschlossen, die zum Laden elektrischer Fahrzeuge eingerichtet sind. Konkret sind die Ladestationen 14a und 14b an dem Abzweig 12a, die Ladestationen 14c-e an den Abzweig 12b, die Ladestationen 14f und 14g an den Abzweig 12c und die Ladestationen 14h-j an den Abzweig 12d angeschlossen. Die Topologie des Energieverteilnetzes der Figur 1 soll allerdings nur beispielhaft zur Erläuterung der Erfindung dienen, selbstverständlich sind andere Netzformen, mit mehr oder weniger Abzweigen und mehr oder weniger sowie anders angeschlossenen Ladestationen möglich.

Zur Steuerung der Ladestationen 14a-j ist eine Steuereinrichtung 15 vorgesehen, die mit den Ladestationen 14a-j über eine Powerline Communication oder eine drahtlose Kommunikationsverbindung (z.B. WiFi, Mobiltelefonverbindung, LoRa WAN, Narrowband-IoT) oder über das Internet Nachrichten austauschen kann. Die Steuereinrichtung 15 ist außerdem mit Stromsensoren 16a-d verbunden, die den in den einzelnen Abzweigen 12a-d fließenden Strom erfassen und ein entsprechendes analoges Signal bzw. entsprechende digitale Messwerte an die Steuereinrichtung 15 übertragen.

Durch den seitens des Betreibers des Energieverteilnetzes 10 weitgehend unkontrolliert geschehenden Ausbau des Netzes 10 mit Ladestationen für Elektrofahrzeuge kann es vorkommen, dass zu Spitzenzeiten einzelne oder alle Abzweige 12a-d des Energieverteilnetzes 10 überlastet werden, d.h. von einem zu hohen Strom durchflossen werden. Um dies zu vermeiden, führt der Netzbetreiber eine Steuerung der Ladestationen (Lademanagement) in der Weise durch, dass eine Überlast verhindert werden kann.

Anhand von Figur 1 soll zunächst das grundsätzliche Problem beschrieben werden, das sich beim Lademanagement von Elektrofahrzeugen in Energieverteilnetzen stellt. Hierzu sei angenommen, dass an die Abzweige 12a-d des Energieverteilnetzes 10 mehrere Ladestationen 14a-j angeschlossen sind. Im Betrieb muss die Steuereinrichtung 15 zunächst eine mögliche Überlast der Abzweige 12a-d erkennen. Dazu überwacht den jeweils von den Stromsensoren 16a-d aufgenommenen Strom und vergleicht ihn mit einem abzweigspezifisch festgelegten Schwellenwert. Beim Überschreiten eines Schwellenwertes ermittelt die Steuerungseinrichtung 15 eine geeignete Sollvorgabe, um diese Schwellenwertverletzung zu beheben, und sendet diese dann an die Ladestationen. Dabei ist zu berücksichtigen, dass die Steuerungsvorgänge spezifisch für den einzelnen Abzweig sein sollen. Da es sich bei den Schwellenwertverletzungen im Wesentlichen um Stromüberlasten handelt, ist es wünschenswert, nur die Ladestationen in dem betroffenen Abzweig zu beeinflussen. Dies bedeutet, dass auch die Steuerungsvorgänge spezifisch für den Abzweig erfolgen sollten.

In klassischen Ansätzen zur Energieautomatisierung müsste der Steuereinrichtung 15 dazu die Zuordnung der Ladestationen 14a-j zu den einzelnen Abzweigen 12a-d bekannt gemacht werden. In vielen Energieverteilnetzen, insbesondere in Niederspannungsverteilnetzen, liegen diese Daten jedoch nicht oder nicht in maschinenlesbarer Form vor, so dass der Aufwand bei der Inbetriebnahme sehr hoch wäre, weil die dazu notwendigen Daten erhoben, verwaltet und gepflegt werden müssen. Weiterhin muss berücksichtigt werden, dass es sich bei den Ladestationen um (private) Endkundenanlagen handelt, die ohne Planung des Netzbetreibers im Energieverteilnetz installiert und deinstalliert werden. Das bedeutet, dass die Datenhaltung in den Energieautomatisierungsgeräten laufend aktualisiert werden müsste. Weiterhin müsste die Steuereinrichtung bei klassischen Steuerungskonzepten auch die zur Verfügung stehende aktuelle Flexibilität der sich in Betrieb befindlichen Ladestationen kennen. Diese hängt von der potentiellen Ladeleistung der jeweiligen Ladestation (z.B. 3,6kW, 11kW oder 22kW) und der aktuellen Ladeleistung des Elektrofahrzeuges ab, die variieren kann. Das bedeutet, dass die Steuereinrichtung bei einem klassischen Steuerungskonzept zum einen weitere Konfigurationsdaten und zum anderen aktuelle Informationen zur augenblicklich aufgenommen Ladeleistung vorhalten müsste. Dies würde prinzipiell eine bidirektionale Kommunikation zwischen der Steuereinrichtung und den Ladestationen erfordern. Dies ist aber aus Gründen der Kommunikationskosten, der IT-Sicherheit und des Datenschutzes nicht immer möglich bzw. erwünscht. Durch die große Anzahl an Ortsnetzstationen in einem Verteilnetz sowie durch die zu erwartende große Anzahl an Ladestationen würden die traditionellen Energieautomatisierungskonzepte also zu sehr hohen Kosten bei der Konfiguration und Parametrierung sowie dem laufenden Betrieb der Automatisierungsgeräte führen.

Um ein vorteilhaftes Kosten-Nutzen-Verhältnis zu erreichen, werden also für den Einsatz in den Energieverteilnetzen, insbesondere Niederspannungsnetzen, Komponenten benötigt, die mit einem Minimum an Konfigurationen und Parametrierungen auskommen bzw. im besten Falle sogar konfigurationslos arbeiten. Nachfolgend wird daher ein selbstlernendes, konfigurationsfreies System zum Lademanagement von Elektrofahrzeugen in Energieverteilnetzen vorgeschlagen, bei dem weder die Steuereinrichtung 15 noch die Ladestationen 14a-j konfiguriert und parametriert werden müssen.

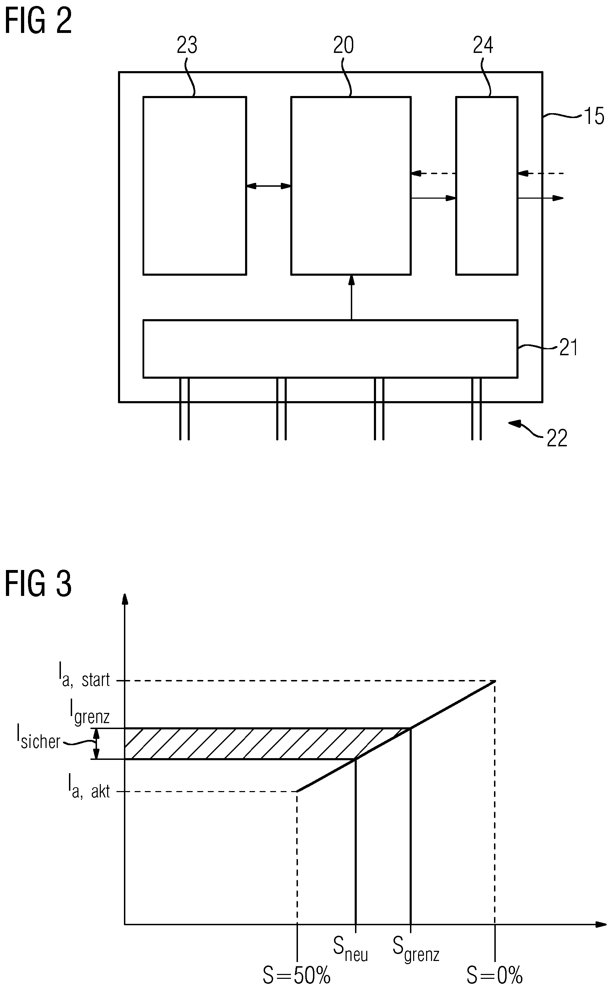

Dazu wird eine Steuereinrichtung 15 vorgesehen, die wie in Figur 2 dargestellt ausgebildet ist. Figur 2 zeigt in schematischer Ansicht ein Ausführungsbeispiel einer Steuereinrichtung 15. Die Steuereinrichtung 15 weist eine Recheneinrichtung 20, z.B. eine CPU oder einen hardwarebasierten Rechenbaustein (z.B. FPGA, ASIC) auf. Die Recheneinrichtung 20 ist mit einer Messwerterfassungseinrichtung 21 verbunden. Die Messwerterfassungseinrichtung 21 dient dazu, die von den Stromsensoren 16a-d erfassten analogen oder digitalen Stromsignale bzw. Strommesswerte seitens der Steuereinrichtung 15 über lediglich schematisch angedeutete Messeingänge 22 zu erfassen und für eine weitere Verarbeitung aufzubereiten. Die Recheneinrichtung 20 ist zudem mit einer Speichereinrichtung 23 verbunden, in der beispielsweise die Strommesswerte der einzelnen Abzweige 12a-d abgespeichert werden können. Schließlich ist die Recheneinrichtung 20 auch mit einer Kommunikationseinrichtung 24 verbunden, die zum Herstellen einer Kommunikationsverbindung mit den Ladestationen 14a-j dient und bei der es sich z.B. um ein Modem für die Powerline Communication oder eine Einrichtung zur Kommunikation über eine drahtlose Schnittstelle handeln kann. Über die Kommunikationseinrichtung 24 kann die Recheneinrichtung 20 beispielsweise Steuersignale an die Ladestationen 14a-j abgeben. Außerdem können sich über die Kommunikationseinrichtung 24 die einzelnen Ladestationen 14a-j bei der Steuereinrichtung 15 zu Zwecken der Kommunikation anmelden.

Die Steuereinrichtung 15 führt im Betrieb die nachfolgend beschriebenen Funktionen durch, die beispielsweise in Form von Softwareapplikationen implementiert sein können und die permanent in der Steuereinrichtung 15 ausgeführt werden. Dabei können unterschiedliche Ausführungszyklen zum Einsatz kommen. Die erste Applikation bestimmt die Sollwertvorgaben für die Ladestationen 14a-j, die zweite Funktion bestimmt selbstständig die Zuordnung der Ladestationen 14a-jzu den einzelnen Abzweigen 12a-d.

Zunächst soll anhand von Figur 3 die erste Applikation hinsichtlich der Bestimmung der Sollwertvorgaben für die Ladestationen 14a-j beschrieben werden. Dabei werde zunächst davon ausgegangen, dass die Zuordnung der Ladestationen 14a-j zu den einzelnen Abzweigen 12a-d der Steuereinrichtung 15 bekannt ist und die Ladestationen 14a-j noch keine Sollwertvorgabe (Steuerwert s = 0%) zur Anpassung ihrer Ladeleistung empfangen haben. In diesem Fall werden sie entsprechend der seitens des Verwenders der Ladestation jeweils geforderten Ladeleistung zum Aufladen der Batterien von Elektrofahrzeugen betrieben. Dieser Betrieb kann fortgesetzt werden, bis durch die Recheneinrichtung 20 der Steuereinrichtung 15 eine Stromüberlastung eines Abzweigs, z.B. des Abzweigs 14a, festgestellt worden ist. Hierzu vergleicht die Recheneinrichtung 20 kontinuierlich die von den Stromsensoren 16a-d erfassten und der Steuereinrichtung 15 über die Messwerterfassungseinrichtung 21 bereitgestellten Strommesswerte I jedes Abzweigs 12a-d mit einem jeweiligen abzweigspezifischen Schwellenwert I_{grenz}. Sobald die Recheneinrichtung 20 der Steuereinrichtung 15 eine Schwellenwertüberschreitung feststellt hat (I_{a,start} > I_{grenz}), sendet sie über die Kommunikationseinrichtung 24 zunächst ein Steuersignal mit einem Steuerwert s an die Ladestationen 14a-b, von denen sie weiß, dass sie an dem von der Schwellenwertverletzung betroffenen des Abzweig 12a angeschlossen sind. Der Steuerwert veranlasst die Ladestationen 14a-b zur entsprechenden Anpassung ihrer Ladeleistung. Beispielhaft sei angenommen, dass der Steuerwert s eine Sollwertvorgabe zur Halbierung der aktuellen Ladeleistung bedeutet (s = 50%).

Im Anschluss prüft die Steuereinrichtung 15, ob die aktuelle Strombelastung I_{a,akt} immer noch zu einer Schwellenwertüberschreitung führt (I_{a,akt} > I_{grenz}?). Falls ja, wird die oben beschriebene Vorgehensweise so lange wiederholt, bis die Überlastung beendet ist, also gilt I_{a,akt} ≤ I_{grenz}. Dazu kann beispielsweise wiederholt eine jeweilige Reduzierung um weitere 50% stattfinden.

Ist die Schwellenwertverletzung nach der ersten oder mehreren Anpassungen aufgehoben, ist das Problem der Stromüberlastung zunächst gelöst, so dass kein kritischer Zustand des Energieverteilnetzes mehr vorliegt. Allerdings könnte es sein, dass die letzte Anpassung unnötig stark war, also beispielsweise, dass die Ladeleistung der Elektrofahrzeuge unnötig weit abgesenkt wurde. Deswegen wird im nächsten Schritt zunächst eine Größe berechnet, die ähnlich einer Netzstatik angibt, welcher relative Lasthub mit der Sollwertvorgabe erreicht wurde: $g = \frac{{I}_{a , start} - {I}_{a , akt}}{100 % - {s}_{akt}}$ (1)

Unter der Annahme eines linearen Verhaltens der angeschlossenen Ladestationen kann berechnet werden, auf welchen Steuerwert die Sollwertvorgabe eingestellt werden kann, um die Ladeleistung so wenig wie möglich zu reduzieren: ${S}_{neu} = {s}_{akt} - \frac{{I}_{grenz} - {I}_{a , akt} - {I}_{sicher}}{g}$ (2)

Dabei ist I_{sicher} ein Sicherheitsband (vgl. Figur 3), das vorgegeben werden kann, um zu verhindern, dass es durch das natürliche Lastrauschen direkt nach der Anpassung wieder zu Schwellenwertverletzungen kommt. Nach der Berechnung wird sₙₑᵤ an die Ladestationen des betroffenen Abzweigs übertragen.

Der Berechnungsschritt gemäß Gleichung (2) kann im Folgenden zyklisch wiederholt werden, um die Ladeleistung an die natürlichen Lastschwankungen anzupassen.

Falls die Steuereinrichtung 15 erneut eine Schwellenwertverletzung feststellt (weil beispielsweise weitere Ladestationen ihren Betrieb aufgenommen haben), werden die oben beschriebenen Schritte mit der Intervallsuche zur Bestimmung des Startwertes erneut angestoßen.

Gleichung (2) dient auch zur Erkennung, dass sich das Netz wieder im ungestörten Betrieb befindet. Wenn nämlich der aktuelle Strom so klein ist, dass Gleichung (2) zu negativen Werten von sₙₑᵤ führt, ist dies ein Zeichen dafür, dass eine Regelung nicht mehr notwendig ist. Der Sollwert wird dann auf 0% gesetzt und an alle Ladestationen übertragen. Die Steuereinrichtung 15 geht dann wieder in den Überwachungsmodus, ohne zyklisch die Sollwertvorgaben zu berechnen.

Die oben beschriebene Vorgehensweise ermöglicht einen Betrieb des Energieverteilnetzes für den Fall, dass die Zuordnung aller Ladestationen zu ihrem jeweiligen Abzweig bekannt und in der Steuereinrichtung 15 hinterlegt sind. Sollte eine neue Ladestation zu den bestehenden hinzukommen, ist jedoch zunächst unklar, an welchem Abzweig sie angeschlossen wurde. Um für den Betrieb dennoch nicht darauf warten zu müssen, dass zunächst alle Zuordnungen der Ladestationen zu den Abzweigen eindeutig bestimmt worden sind, ist vorgesehen, dass die Steuersignale von der Steuereinrichtung 15 an zwei Gruppen von Ladestationen gesendet werden. Die erste Gruppe besteht aus denjenigen Ladestationen, die eindeutig dem betroffenen Abzweig, auf dem die Schwellenwertverletzung erkannt worden ist, zugeordnet werden können. Die zweite Gruppe besteht aus allen Ladestationen, die noch nicht eindeutig zugeordnet wurden, hinsichtlich denen somit noch unklar ist, an welchem Abzweig sie angeschlossen sind. Dieses Vorgehen bietet zwei Vorteile. Zum einen ist sichergestellt, dass die Steuereinrichtung sofort nach ihrer Inbetriebnahme mit der Behebung von Schwellenwertverletzungen beginnt, also sofort stabilisierend für das Netz wirkt. Weiterhin ist damit sichergestellt, dass auch bei dem späteren Zubau von Ladestationen die neuen Ladestationen zur Beseitigung der Schwellenwertverletzung beitragen. Es kommt in beiden Fällen zwar unter Umständen dazu, dass auch solche Ladestationen die Ladeleistung reduzieren, die nicht an dem von der Schwellenwertverletzung betroffenen Abzweig angeschlossen sind; jedoch ist zumindest sichergestellt, dass von Anfang an und auch bei Umbauten Schwellenwertverletzungen überhaupt beseitigt werden.

Das vorgeschlagene Verfahren kann wie oben bereits erwähnt auch genutzt werden, wenn sich die in den Elektrofahrzeugen befindlichen Batterien im Sinne von "Vehicle-to-Grid-Ansätzen" durch Rückspeisung elektrischer Energie in Bedarfszeiten an der Stabilisierung des Netzes beteiligen sollen und damit Systemdienste erbringen. Dazu müssen die Steuerwerte s lediglich als Befehle für die Erhöhung der Einspeisung interpretiert werden (s = 0% bedeutet keine Einspeiseleistung, s=100% bedeutet volle Einspeiseleistung).

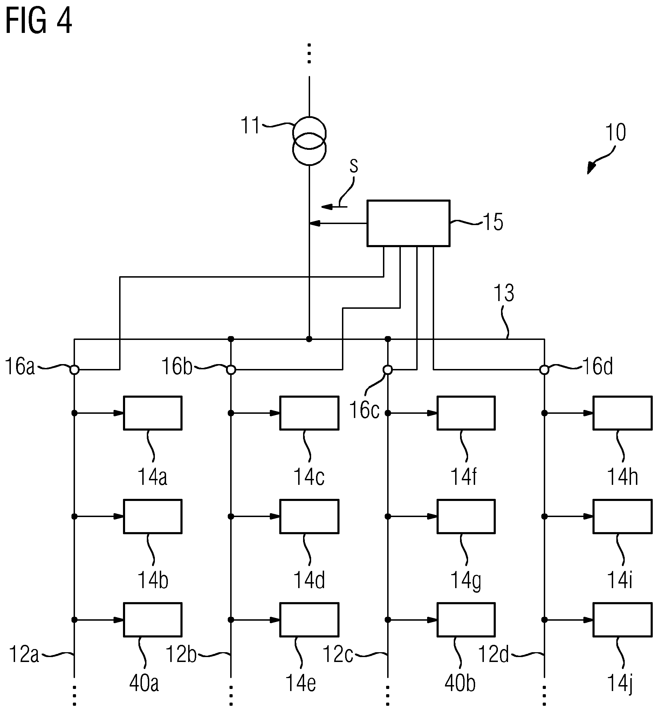

Nachfolgend wird anhand von Figur 4 die zweite von der Steuereinrichtung 15 ausgeführte Applikation beschrieben, mit der eine Bestimmung der Zuordnung neu in Betrieb genommener Ladestationen zu ihrem jeweiligen Abzweig erfolgen kann, ohne dass hierzu eine manuelle Konfiguration notwendig ist. Dabei wird angenommen, dass im Vergleich zum Energieverteilnetz der Figur 1 neue Ladestationen 40a und 40b an die Abzweige 12a und 12c angeschlossen worden sind. Bei der Inbetriebnahme einer neuen Ladestation 40a,b meldet diese sich zunächst als allgemeines "Kommunikationsgerät" bei der Steuereinrichtung 15 an, um überhaupt eine Kommunikation mit der Steuereinrichtung 15 durchführen zu können. Damit ist der Steuereinrichtung 15 grundsätzlich bekannt, dass es die Ladestationen 40a,b in ihrem Energieverteilnetz gibt, sie weiß aber noch nicht, an welchem Abzweig 12a-d diese Ladestationen 40a,b konkret angeschlossen sind.

Zur Bestimmung der Zuordnung erzeugt diese Applikation zur Erkennung der Zuordnung zunächst eine Sammlung von Messdaten, die später einer Klassifikation unterzogen werden. Hierzu sendet die Steuereinrichtung 15 Test-Steuersignale an die jeweilige neue Ladestation 40a,b und wertet die veränderten Strommesswerte in den Abzweigen 12a-d aus. Die Klassifikation stellt einen Zusammenhang zwischen den Test-Steuersignalen und den reduzierten Strombelastungen der Abzweige 12a-d her und erkennt damit die Zuordnung der jeweiligen neuen Ladestation 40a,b zu ihrem jeweiligen Abzweig.

Die Vorgehensweise wird für jede neue Ladestation gesondert durchgeführt. Dazu wählt die Steuereinrichtung 15 eine neue Ladestation, z.B. die Ladestation 40a, aus, protokolliert die aktuellen Messwerte aller Abzweige 12a-d, sendet an die ausgewählte Ladestation 40a ein Test-Steuersignal mit einem Steuerwert, wartet eine definierte Zeit (zum Beispiel einige Sekunden) ab und protokolliert die Messwerte aller Abzweige 12a-d erneut. Diese Daten werden als ein Datensatz im Speicher 23 abgelegt. Dieser Datensatz besteht unter anderen aus den folgenden Einträgen:
a) Name oder Nummer der ausgewählten neuen Ladestation;
b) fortlaufende Nummer der Messung;
c) Vektor der Strommessungen aller Abzweige 12a-d vor dem Aussenden des Test-Steuersignals;
d) Vektor der Strommessungen aller Abzweige nach dem Aussenden des Test-Steuersignals;
e) Vektor der Differenzen der Strommessungen der Einträge unter c) und d).

Nachdem dieser Vorgang für die ausgewählte Ladestation 40a durchgeführt worden ist, wird die nächste neue Ladestation 40b ausgewählt und die beschriebene Vorgehensweise wiederholt. Prinzipiell wird dies für alle neuen Ladestationen, die noch nicht eindeutig zugeordnet worden sind, durchgeführt.

Außerdem wird die Vorgehensweise über einen längeren Zeitraum in gewissen Zeitabständen wiederholt. Wiederholungen zu verschiedenen Zeiten sind vorteilhaft, weil üblicherweise Elektrofahrzeuge nicht permanent an den Ladestationen angeschlossen sind und somit durchaus die Wahrscheinlichkeit besteht, dass die ausgewählte Ladestation zum Zeitpunkt des Aussendens des Test-Steuersignals nicht in Betrieb ist und daher keine kausalen Veränderungen der Strommessungen auftreten. Bevorzugt werden die Test-Steuersignale zu solchen Zeitpunkten ausgesendet, in denen ein Laden der Elektrofahrzeuge besonders wahrscheinlich ist, zum Beispiel in den frühen Abendstunden.

Nachdem auf diese Weise nach einiger Zeit eine Sammlung von Messdaten erzeugt worden ist, erfolgt mit Hilfe von Klassifikationsverfahren die Zuordnung der Ladestationen zu den Abzweigen. Ein bevorzugtes Klassifikationsverfahren wird nachfolgend beispielhaft beschrieben, andere Klassifikationsverfahren sind ebenso denkbar:
Zunächst wird ein Zuordnungsvektor aus ganzen Zahlen gebildet, dessen Anzahl an Komponenten der Anzahl der Abzweige entspricht. Diese Komponenten werden mit dem Wert Null initialisiert. Danach werden aus den oben genannten Datensätzen alle zu einer Ladestation (Eintrag a) aus der Datensammlung) gehörenden Vektoren der Differenzen (Eintrag e) aus der Datensammlung) ausgewählt. Für jede Komponente des Differenzen-Vektors wird geprüft, ob die gemessene Lastreduktion größer als eine vorgegebene Toleranz ist. Falls ja, wird die entsprechende Komponente des Zuordnungsvektors um eins erhöht. Wird beispielsweise die Datensammlung für die Ladestation 40a ausgewählt und durch den Differenzen-Vektor eine signifikante Lastreduktion für den Abzweig 12a erkannt, so wird der Eintrag für diesen Abzweig 12a im Zuordnungsvektor um eins erhöht.

Nachdem alle Datensätze für eine Ladestation untersucht worden sind, ergibt sich die Zuordnung der Ladestation zu einem Abzweig aus der Komponente des Zuordnungsvektors mit dem größten Betrag. Falls mehrere Komponenten denselben Betrag haben oder sich ihre Werte nicht deutlich genug unterscheiden, wird die Datensammlung wie oben beschrieben fortgesetzt. Die Zuordnung ist abgeschlossen, wenn für alle neuen Ladestationen die Zuordnung zu den Abzweigen eindeutig erkannt wurde.

Im laufenden Betrieb des Energieverteilnetzes wird es immer wieder vorkommen, dass weitere neue Ladestationen in das Energieverteilnetz integriert werden. In diesem Fall werden die oben genannten Schritte für diese neuen Ladestationen ausgeführt.

Die beschriebe Steuereinrichtung zeichnet sich unter anderem durch die folgenden Vorteile aus:
Die im Detail erläuterten Applikationen zur Steuerung und Zuordnung kommen vollständig ohne manuelle Konfiguration und Parametrierung aus. Damit ergeben sich erheblich Vorteile bei der Inbetriebnahme der Steuereinrichtung und der Ladestationen, weil beispielsweise Trainingsaufwand des Montagepersonals und Zeitaufwand für die Inbetriebnahme der Geräte deutlich reduziert werden. Insbesondere die Ladestationen können damit auch von einem Elektroinstallateur eingebaut und einfach in Betrieb genommen werden. Das Beobachtungs- und Steuerungskonzept benötigt im Betrieb lediglich eine unidirektionale Kommunikation von der Steuereinrichtung zu den Ladestationen, ein Rückkanal ist nicht erforderlich. Damit reduziert sich die Datenmenge, die über den Kommunikationskanal übertragen werden muss. Dies ist vor allem bei schmalbandigen Kommunikationsverfahren von Vorteil (z.B. Schmalband-PLC oder Narrowband-IOT). Die unidirektionale Kommunikation ist weiterhin aus IT-Sicherheitsgründen von Vorteil, weil es im laufenden Betrieb keine Kommunikation von der jeweiligen Ladestation in Richtung der Steuereinrichtung gibt. Das vorgeschlagene Betriebsverfahren erfüllt auch sehr strenge Anforderungen des Datenschutzes, weil keine persönlichen Daten von einer Ladestation an die Steuereinrichtung übertragen werden. Insbesondere werden in der Steuereinrichtung überhaupt keine Daten gesammelt, die Rückschlüsse auf das Verhalten der Nutzer zulassen, z.B. wann ein Nutzer zuhause ist oder welche Fahrleistung er täglich zurücklegt.

Mit dem vorgeschlagenen Steuerungskonzept müssen nur die Steuerwerte "s" von der Steuereinrichtung an die Ladestationen übergeben werden, weitere Daten sind nicht erforderlich. Damit ist es einfach möglich, bereits bestehende Kommunikationsprotokolle zu nutzen, wie zum Beispiel das OCCP-Protokoll. Das vorgeschlagene Verfahren ist zudem unabhängig von der eingesetzten Kommunikationstechnik. Es muss lediglich sichergestellt werden, dass der Steuereinrichtung alle in ihrem Verteilnetz vorhandenen Ladestationen überhaupt bekannt gemacht werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Verfahren zum Betreiben eines elektrischen Energieverteilnetzes (10), wobei das Energieverteilnetz (10) zumindest zwei Abzweige (12a-d) aufweist, die mit elektrischer Energie gespeist werden, und wobei an die Abzweige (12a-d) eine Mehrzahl von Ladestationen (14a-j) elektrisch angeschlossen sind, wobei
- der in den jeweiligen Abzweigen (12a-d) fließende Strom erfasst wird;
- mit einer Steuereinrichtung (15) geprüft wird, ob der in dem jeweiligen Abzweig (12a-d) fließende Strom einen abzweigspezifischen Schwellenwert verletzt
- bei erkannter Schwellenwertverletzung von der Steuereinrichtung (15) ein Steuersignal erzeugt wird,
**dadurch gekennzeichnet, dass**
- das über eine unidirektionale Kommunikationsverbindung an zumindest alle diejenigen Ladestationen (14a-j) übertragen wird, die an den Abzweig (12a-d), für den die Schwellenwertverletzung erkannt worden ist, angeschlossenen sind, wobei das Steuersignal einen Steuerwert umfasst, der eine prozentuale Angabe zur Reduzierung der Ladeleistung enthält; und
- die das Steuersignal empfangenden Ladestationen (14a-j) ihre Ladeleistung entsprechend dem Steuerwert anpassen,
- wobei die Steuereinrichtung (15) im Anschluss prüft, ob die aktuelle Strombelastung (I_{a,akt}) immer noch zu einer Schwellenwertüberschreitung führt (I_{a,akt} > I_{grenz}?) und falls ja, die oben beschriebene Vorgehensweise so lange wiederholt wird, bis die Überlastung beendet ist.

2. Verfahren nach Anspruch 1,
**dadurch gekennzeichnet, dass**
- wenn die Prüfung ergibt, dass der Schwellenwert nicht mehr verletzt wird, mittels der Steuereinrichtung (15) eine Abweichung des aktuell in dem fraglichen Abzweig vorliegenden Stromflusses von einem als unkritisch angesehenen Stromfluss ermittelt wird; und
- mittels eines weiteren Steuersignals die Ladeleistung der jeweiligen Ladestationen (14a-j) derart angepasst wird, dass sich in dem Abzweig (12a-d) der als unkritisch angesehene Stromfluss einstellt.

3. Verfahren nach Anspruch 2,
**dadurch gekennzeichnet, dass**
- der als unkritisch angesehene Stromfluss dem Schwellenwert entspricht oder von diesem abgeleitet wird.

4. Verfahren nach einem der vorangehenden Ansprüche,
**dadurch gekennzeichnet, dass**
- das Steuersignal einerseits an solche Ladestationen (14a-j) gesendet wird, die von der Steuereinrichtung (15) eindeutig dem fraglichen Abzweig (12a-d) zugeordnet werden können, und andererseits an solche Ladestationen (14a-j) gesendet wird, die von der Steuereinrichtung (15) keinem Abzweig (12a-d) eindeutig zugeordnet werden können.

5. Verfahren nach einem der vorangehenden Ansprüche,
**dadurch gekennzeichnet, dass**
- nach Anschluss einer neuen Ladestation (40a,b) an einen der Abzweige (12a-d) die Steuereinrichtung (15) eine Erkennung durchführt, an welchem Abzweig die neue Ladestation (140a,b) angeschlossen ist.

6. Verfahren nach Anspruch 5,
**dadurch gekennzeichnet, dass**
- zur Erkennung, an welchem Abzweig (12a-d) die neue Ladestation (40a,b) angeschlossen ist, die Steuereinrichtung (15) an die neue Ladestation (40a,b) ein Test-Steuersignal sendet;
- die neue Ladestation (40a,b) bei Empfang des Test-Steuersignals ihre Ladeleistung anpasst; und
- die Steuereinrichtung (15) den Strom in den Abzweigen (12a-d) vor und nach dem Aussenden des Test-Steuersignals vergleicht und die neue Ladestation (40a,b) als an demjenigen Abzweig (12a-d) angeschlossen erkennt, an dem der Strom-Vergleich eine auf das Test-Steuersignal zurückzuführende Änderung des fließenden Stroms ergibt.

7. Verfahren nach Anspruch 6,
**dadurch gekennzeichnet, dass**
- zur Erkennung, ob eine Änderung des fließenden Stroms in einem Abzweig (12a-d) auf das Test-Steuersignal zurückzuführen ist, der Versand des Test-Steuersignals und die Durchführung des Strom-Vergleichs wiederholt ausgeführt werden; und
- die Steuereinrichtung (15) die neue Ladestation (40a,b) als an demjenigen Abzweig (12a-d) angeschlossen erkennt, an dem sich am häufigsten eine Änderung des fließenden Stroms ergibt.

8. Verfahren nach einem der vorangehenden Ansprüche,
**dadurch gekennzeichnet, dass**
- das Steuersignal von der Steuereinrichtung (15) an die Ladestationen (14a-j) als auf einer Leitung des Energieverteilnetzes aufmoduliertes Signal oder über eine drahtlose Kommunikationsverbindung oder über eine Internetverbindung übertragen wird.

9. Steuereinrichtung (15) zum Betreiben eines elektrischen Energieverteilnetzes (10), wobei das Energieverteilnetz (10) zumindest zwei Abzweige (12a-d) aufweist, die mit elektrischer Energie gespeist werden, und wobei an die Abzweige (12a-d) eine Mehrzahl von Ladestationen (14a-j) elektrisch angeschlossen sind, wobei die Steuereinrichtung (15) dazu eingerichtet ist,
- in den jeweiligen Abzweigen (12a-d) fließende Ströme zu erfassen und zu prüfen, ob der in dem jeweiligen Abzweig (12a-d) fließende Strom einen abzweigspezifischen Schwellenwert verletzt;
**dadurch gekennzeichnet, dass** die Steuereinrichtung (15) dazu eingerichtet ist,
- bei erkannter Schwellenwertverletzung ein Steuersignal zu erzeugen, das über eine unidirektionale Kommunikationsverbindung an zumindest alle diejenigen Ladestationen (14a-j) übertragen wird, die an den Abzweig (12a-d), für den die Schwellenwertverletzung erkannt worden ist, angeschlossenen sind, wobei das Steuersignal einen Steuerwert umfasst, der eine prozentuale Angabe zur Reduzierung der Ladeleistung enthält, um die das Steuersignal empfangenden Ladestationen (14a-j) zur Anpassung ihrer Ladeleistung entsprechend dem Steuerwert zu veranlassen,
- wobei die Steuereinrichtung (15) im Anschluss überprüft, ob die aktuelle Strombelastung (I_{a,akt}) immer noch zu einer Schwellenwertüberschreitung führt (I_{a,akt} > I_{grenz}?) und falls ja, die oben beschriebene Vorgehensweise so lange wiederholt, bis die Überlastung beendet ist.

## Claims

1. Method for operating an electrical energy distribution network (10), wherein the energy distribution network (10) has at least two branches (12a-d) which are fed with electrical energy, and wherein a plurality of charging stations (14a-j) are electrically connected to the branches (12a-d), wherein
- the current flowing in the respective branches (12a-d) is captured;
- a control device (15) is used to check whether the current flowing in the respective branch (12a-d) violates a branch-specific threshold value;
- a control signal is generated by the control device (15) when a threshold value violation is detected,
**characterized in that**
- the control signal is transmitted via a unidirectional communication connection to at least all those charging stations (14a-j) which are connected to the branch (12a-d) for which the threshold value violation has been detected, wherein the control signal comprises a control value containing a percentage indication for reducing the charging power; and
- the charging stations (14a-j) receiving the control signal adapt their charging power in accordance with the control value,
- wherein the control device (15) subsequently checks whether the present current load (I_{a,akt}) still leads to a threshold value being exceeded (I_{a,akt} > I_{grenz}?) and, if so, the procedure described above is repeated until the overload has ended.

2. Method according to Claim 1,
**characterized in that**
- if the check reveals that the threshold value is no longer violated, a deviation of the current flow currently present in the branch in question from a current flow considered to be non-critical is determined by means of the control device (15); and
- the charging power of the respective charging stations (14a-j) is adapted by means of a further control signal in such a way that the current flow which is considered to be non-critical is established in the branch (12a-d).

3. Method according to Claim 2,
**characterized in that**
- the current flow considered to be non-critical corresponds to or is derived from the threshold value.

4. Method according to one of the preceding claims,
**characterized in that**
- the control signal is sent on the one hand to those charging stations (14a-j) which can be uniquely assigned to the branch (12a-d) in question by the control device (15), and on the other hand to those charging stations (14a-j) which cannot be uniquely assigned to any branch (12a-d) by the control device (15).

5. Method according to one of the preceding claims,
**characterized in that**
- after a new charging station (40a,b) has been connected to one of the branches (12a-d), the control device (15) detects which branch the new charging station (140a,b) is connected to.

6. Method according to Claim 5,
**characterized in that**
- in order to detect which branch (12a-d) the new charging station (40a,b) is connected to, the control device (15) sends a test control signal to the new charging station (40a,b);
- the new charging station (40a,b) adapts its charging power upon receipt of the test control signal; and
- the control device (15) compares the current in the branches (12a-d) before and after emitting the test control signal and detects the new charging station (40a,b) as being connected to that branch (12a-d) at which the current comparison reveals a change in the flowing current that is attributable to the test control signal.

7. Method according to Claim 6,
**characterized in that**
- in order to detect whether a change in the flowing current in a branch (12a-d) is attributable to the test control signal, the sending of the test control signal and the performance of the current comparison are carried out repeatedly; and
- the control device (15) detects the new charging station (40a,b) as being connected to that branch (12a-d) at which a change in the flowing current is most frequently produced.

8. Method according to one of the preceding claims,
**characterized in that**
- the control signal is transmitted from the control device (15) to the charging stations (14a-j) as a signal modulated on a line of the energy distribution network or via a wireless communication connection or via an Internet connection.

9. Control device (15) for operating an electrical energy distribution network (10), wherein the energy distribution network (10) has at least two branches (12a-d) which are fed with electrical energy, and wherein a plurality of charging stations (14a-j) are electrically connected to the branches (12a-d), wherein the control device (15) is configured
- to capture currents flowing in the respective branches (12a-d) and to check whether the current flowing in the respective branch (12a-d) violates a branch-specific threshold value;
**characterized in that**
the control device (15) is configured
- to generate a control signal, when a threshold value violation is detected, which control signal is transmitted via a unidirectional communication connection to at least all those charging stations (14a-j) which are connected to the branch (12a-d) for which the threshold value violation has been detected, wherein the control signal comprises a control value containing a percentage indication for reducing the charging power, in order to cause the charging stations (14a-j) receiving the control signal to adapt their charging power in accordance with the control value,
- wherein the control device (15) subsequently checks whether the present current load (I_{a,akt}) still leads to a threshold value being exceeded (I_{a,akt} > I_{grenz}?) and, if so, repeats the procedure described above until the overload has ended.

## Revendications

1. Procédé pour faire fonctionner un réseau (10) de distribution d'énergie électrique, dans lequel le réseau (10) de distribution d'énergie électrique a au moins deux dérivations (12a-d), qui sont alimentées en énergie électrique, et dans lequel aux dérivations (12a-d) sont raccordées électriquement une pluralité de bornes (14a-j) de charge, dans lequel
- on détecte le courant passant dans les dérivations (12a-d) respectives ;
- par un dispositif (15) de commande, on contrôle, si le courant passant dans la dérivation (12a-d) respective franchit une valeur de seuil spécifique à la dérivation,
- à l'identification d'un franchissement de la valeur de seuil, on produit un signal de commande par le dispositif (15) de commande,
**caractérisé en ce qu'**
- on le transmet, par une liaison de communication unidirectionnelle, à au moins toutes les bornes (14a-j) de charge, qui sont raccordées à la dérivation (12a-d), pour laquelle le franchissement de la valeur de seuil a été identifiée, dans lequel le signal de commande comprend une valeur de commande, qui contient une indication en pourcentage de réduction de la puissance de charge ; et
- les bornes (14a-j) de charge recevant le signal de commande adaptent leur puissance de charge conformément à la valeur de commande,
- dans lequel le dispositif (15) de commande contrôle ensuite, si la charge (I_{a,akt}) de courant en cours conduit (I_{a,akt} > I_{grenz} ?) toujours encore à un franchissement de la valeur de seuil et, dans l'affirmative, la façon de procéder décrite ci-dessus est répétée jusqu'à qu'il soit mis fin à la surcharge.

2. Procédé suivant la revendication 1,
**caractérisé en ce que**,
- lorsque le contrôle donne que la valeur de seuil n'est plus franchie, on établit, au moyen du dispositif (15) de commande, un écart du flux de courant présent en cours dans la dérivation en question à un flux de courant considéré comme non critique ; et
- au moyen d'un autre signal de commande, on adapte la puissance de charge des bornes (14a-j) de charge respectives, de manière à établir, dans la dérivation (12a-d), le flux de courant considéré comme non critique.

3. Procédé suivant la revendication 2,
**caractérisé en ce que**
- le flux de courant considéré comme non critique correspond à la valeur de seuil ou s'en déduit.

4. Procédé suivant l'une des revendications précédentes,
**caractérisé en ce que**
- l'on envoie le signal de commande, d'une part aux bornes (14a-j) de charge, qui peuvent, par le dispositif (15) de commande, être affectées de manière univoque à la dérivation (12a-d) en question, et d'autre part aux bornes (14a-j) de charge, qui ne peuvent pas, par le dispositif (15) de commande, être affectées de manière univoque à une dérivation (12a-d).

5. Procédé suivant l'une des revendications précédentes,
**caractérisé en ce que**,
- après le raccordement d'une nouvelle borne (40a,b) de charge à l'une des dérivations (12a-d), le dispositif (15) de commande effectue une identification pour savoir à quelle dérivation la nouvelle borne (140a,b) de charge est raccordée.

6. Procédé suivant la revendication 5,
**caractérisé en ce que**,
- pour identifier à quelle dérivation (12a-d) la nouvelle borne (40a,b) de charge est raccordée, le dispositif (15) de commande envoie un signal de commande de test à la nouvelle borne (40a,b) de charge ;
- la nouvelle borne (40a,b) de charge adapte sa puissance de charge à la réception du signal de commande de test ; et
- le dispositif (15) de commande compare le courant dans les dérivations (12a-d) avant et après l'envoi du signal de commande de test et la nouvelle borne (40a,b) de charge identifiée comme raccordée à la branche (12a-d), à laquelle la comparaison du courant donne une modification à mettre au compte du signal de commande de test du courant passant.

7. Procédé suivant la revendication 6,
**caractérisé en ce que**,
- pour identifier si une modification du courant passant dans une dérivation (12a-d) est à mettre au compte du signal de commande de test, on effectue de manière répétée l'envoi du signal de commande de test et l'exécution de la comparaison de courant ; et
- le dispositif (15) de commande reconnaît la nouvelle borne (40a,b) de charge, comme raccordée à la dérivation (12a-d), à laquelle il se produit le plus souvent une modification du courant passant.

8. Procédé suivant l'une des revendications précédentes,
**caractérisé en ce que**
- l'on transmet, par une liaison de communication sans fil ou par une liaison internet, le signal de commande du dispositif (15) de commande aux bornes (14a-j) de charge sous la forme d'un signal modulé sur une ligne du réseau de distribution d'énergie.

9. Dispositif (15) de commande pour faire fonctionner un réseau (10) d'alimentation en énergie électrique, dans lequel le réseau (10) d'alimentation en énergie électrique a au moins deux dérivations (12a-d), qui sont alimentées en énergie électrique, et dans lequel aux dérivations (12a-d) sont raccordées électriquement une pluralité de bornes (14a-j) de charge, dans lequel le dispositif (15) de commande est agencé pour
- détecter des courants passants dans les dérivations (12a-d) respectives et contrôler, si le courant passant dans la dérivation (12a-d) respective franchit une valeur de seuil spécifique à une dérivation ;
**caractérisé en ce que**
le dispositif (15) de commande est agencé pour
- produire, à l'identification du franchissement de la valeur de seuil, un signal de commande, qui est transmis par une liaison de communication unidirectionnelle à au moins toutes les bornes (14a-j) de charge qui, sur la dérivation (12a-d), ont été identifiées pour le franchissement de seuil, dans lequel le signal de commande comprend une valeur de commande, qui contient une indication en pourcentage pour la réduction de la puissance de charge, afin de faire que les bornes (14a-j) de charge recevant le signal de commande adaptent leur puissance de charge conformément à la valeur de commande,
- dans lequel le dispositif (15) de commande contrôle ensuite, si la charge la charge (I_{a,akt}) de courant en cours conduit (I_{a,akt} > I_{grenz} ?) toujours encore à un franchissement de la valeur de seuil et, dans l'affirmative, la façon de procédé décrite ci-dessus est répétée jusqu'à qu'il soit mis fin à la surcharge.
